# FASCICULE DE BREVET EUROPEEN

(11) **EP 3 524 524 B1**
(45) Date de publication et mention de la délivrance du brevet: **21.09.2022**
(21) Numéro de dépôt: 19156297.4
(22) Date de dépôt: 08.02.2019
(51) Int. Cl.: B64D 13/00, B64D 13/06, B64D 33/02

(54) **BOUCHE DE PRÉLÈVEMENT D'AIR DYNAMIQUE, DISPOSITIF DE CONTRÔLE ENVIRONNEMENTAL, MOTEUR ET VÉHICULE ÉQUIPÉS D'UNE TELLE BOUCHE**
DYNAMISCHER LUFTEINLASS, KLIMAANLAGE, MOTOR UND FAHRZEUG MIT EINEM SOLCHEN EINLASS AUSGESTATTET
DYNAMIC AIR INTAKE, ENVIRONMENTAL CONTROL DEVICE, ENGINE AND VEHICLE EQUIPPED WITH SUCH AN INTAKE

(30) Priorité: 13.02.2018 FR 1851208
(43) Date de publication de la demande: 14.08.2019
(73) Titulaire: Liebherr-Aerospace Toulouse SAS, 31200 Toulouse (FR)
(72) Inventeur: L'EMEILLAT, Laurent, 31200 Toulouse (FR); FAUQUE, Stéphane, 31200 Toulouse (FR)
(74) Mandataire: BARRE LAFORGUE

(56) Documents cités:
- EP-A1- 2 786 935
- WO-A1-2018/067310
- DE-A1-102007 052 817
- US-A1- 2009 065 297
- US-A1- 2018 093 779
- US-B1- 6 349 899

## Description

L'invention concerne une bouche de prélèvement d'air dynamique d'un véhicule, notamment pour l'alimentation en air d'un dispositif de contrôle environnemental du véhicule. L'invention concerne également un dispositif de contrôle environnemental comprenant une telle bouche de prélèvement d'air dynamique, un moteur de propulsion d'aéronef comprenant une telle bouche de prélèvement d'air et un véhicule, notamment mais non exclusivement un aéronef, comprenant un tel dispositif de contrôle environnemental.

Une bouche de prélèvement d'air dynamique selon l'invention peut alimenter un échangeur, un compresseur ou tout autre composant à alimenter en air dynamique à bord d'un véhicule, par exemple un groupe auxiliaire de puissance d'un aéronef ou un dispositif de contrôle environnemental.

Dans tout le texte, l'expression « contrôle environnemental » désigne le fait de contrôler la température et la pression de l'air dans une cabine. Dans tout le texte, le terme « cabine » désigne tout espace intérieur de véhicule, notamment d'aéronef, dans lequel la pression et la température de l'air doivent être contrôlées. Il peut donc s'agir aussi bien d'une cabine pour passagers, que d'un cockpit, une soute, un espace de chargement de fret...

Les dispositifs de contrôle environnemental tels que les systèmes de conditionnement d'air (« ECS, Environmental Control System ») permettent de fournir de l'air conditionné aux cabines de véhicules accueillant des passagers. De tels dispositifs de conditionnement d'air sont susceptibles d'utiliser de l'air dynamique, c'est-à-dire de l'air s'écoulant le long d'une paroi du véhicule ou d'un composant de ce dernier sous l'effet et/ou lors du déplacement du véhicule dans la masse d'air atmosphérique.

On connaît déjà du document DE 10 2007 052 817 un système de contrôle environnemental d'un aéronef comprenant une première et une deuxième conduites d'entrée d'air et un volet pouvant pivoter entre une position dans laquelle il ferme l'entrée d'air de la deuxième conduite et une position dans laquelle il autorise l'entrée de l'air dans la deuxième conduite. Le volet peut également être placé dans une troisième position dans laquelle il est disposé devant les entrées d'air des deux conduites de façon à empêcher le passage de particules à l'intérieur des deux conduites d'air.

Or un tel dispositif ne permet pas d'optimiser les performances aérodynamiques liées au positionnement d'un tel volet dans les différentes positions. En particulier, un tel dispositif présente une conduite d'entrée d'air disposée de façon permanente en saillie de la carrosserie du véhicule, et donc interférant avec le flux d'air dynamique, augmentant la traînée. Un dispositif selon DE 10 2007 052 817 produit des contraintes mécaniques importantes nécessitant un dimensionnement suffisant pour pouvoir résister à ces contraintes, ce qui entraine un coût de fabrication, une masse et un volume embarqués importants, au détriment des coûts de fabrication et de fonctionnement du véhicule lui-même.

US 6 349 899 décrit un mécanisme de ventilation pour aéronef comprenant une porte pouvant être déplacée entre une position fermée dans laquelle la porte d'entrée d'air ferme la cavité du conduit, une position d'entrée d'air extérieur dans laquelle les éléments coopèrent pour former une écope, et une position complètement ouverte dans laquelle la porte d'entrée d'air est rétractée à l'intérieur du conduit de sorte que la paroi de la porte soit sensiblement parallèle à la portion inférieure de la paroi. Un tel mécanisme peut comprendre deux biellettes permettant de déplacer la porte actionnée par un arbre rotatif. Au moins en position complètement ouverte la porte est en contact avec une portion concave de la paroi interne du conduit.

US 2009/0065297 décrit des portes d'entrée d'air de groupes auxiliaires de puissance d'aéronefs. Dans un mode de réalisation une porte pivote vers l'avant ou vers l'arrière de l'aéronef de façon à être en contact avec une conduite d'entrée d'un groupe auxiliaire de puissance.

Cependant, dans certaines des positions d'ouverture de tels dispositifs, les portes d'entrée d'air subissent des efforts aérodynamiques importants et ne permettent pas d'optimiser les performances aérodynamiques liées à leur positionnement.

L'invention vise à pallier l'ensemble de ces inconvénients.

Pour ce faire, l'invention concerne une bouche de prélèvement d'air selon la revendication 1. Plus particulièrement, l'invention concerne une bouche de prélèvement d'air dynamique comprenant :
- une paroi de peau séparant un espace extérieur susceptible d'être soumis à un flux d'air dynamique et un espace intérieur destiné à recevoir un flux de prélèvement d'air dynamique, ladite paroi de peau présentant une ouverture d'entrée d'air dynamique,
- une conduite s'étendant dans l'espace intérieur à partir de ladite ouverture, ladite conduite étant délimitée par une paroi, dite paroi interne, fixe par rapport à ladite paroi de peau et s'étendant dans l'espace intérieur à partir de ladite ouverture,
- au moins un volet d'ouverture/fermeture de ladite ouverture, chaque volet étant monté mobile par rapport à l'ouverture entre une position fermée dans laquelle ledit volet obture au moins une partie de ladite ouverture, et au moins une position ouverte dans laquelle ledit volet définit une section non nulle de passage d'air dynamique dans la conduite, ledit volet présentant une face externe orientée vers l'espace extérieur en position fermée, et une face interne orientée vers l'espace intérieur et vers l'intérieur de la conduite (y compris en position ouverte), caractérisée en ce que :
- chaque volet est monté mobile par rapport à l'ouverture par au moins une première bielle à laquelle il est articulé selon un premier axe de pivot, et au moins une deuxième bielle à laquelle il est articulé selon un deuxième axe de pivot, les premier et deuxième axes de pivot étant distincts et parallèles entre eux,
- lesdites bielles, chaque volet, ladite conduite et l'ouverture sont conformés et agencés de telle sorte que, en toute position ouverte, une distance, dite écart extérieur, non nulle sépare la face externe de chaque volet de ladite paroi interne de la conduite. En toute position ouverte, chaque volet n'est donc pas au contact de ladite paroi interne de la conduite.

Cet écart extérieur définit donc une section non nulle de passage d'air dynamique entre la face externe du volet et la portion de paroi interne de la conduite en regard de cette face externe. Ainsi, la cinématique du volet est telle qu'en toute position ouverte un flux d'air dynamique non nul peut s'écouler le long de la face externe du volet dans la conduite.

En outre, lesdites bielles, chaque volet, ladite conduite et l'ouverture sont conformés et agencés de telle sorte que, en toute position ouverte, une distance, dite écart intérieur, non nulle sépare la face interne de chaque volet de ladite paroi interne de la conduite. Cet écart intérieur définit donc une section non nulle de passage d'air dynamique entre la face interne du volet et la portion de paroi interne de la conduite en regard de cette face interne. Ainsi, la cinématique du volet est telle qu'en toute position ouverte un flux d'air dynamique non nul peut s'écouler le long de la face interne du volet dans la conduite.

Ainsi, dans une bouche selon l'invention, la cinématique du volet est adaptée pour permettre, en toute position ouverte, l'écoulement d'un flux d'air dynamique non nul le long de la face externe de chaque volet dans la conduite et l'écoulement d'un flux d'air dynamique non nul le long de la face interne de chaque volet dans la conduite.

Une bouche de prélèvement d'air dynamique selon l'invention peut comporter plusieurs volets distincts montés indépendamment les uns des autres par rapport à l'ouverture, qui se jouxtent de façon que ladite ouverture est complètement obturée lorsque tous les volets sont en position de fermeture. Ces volets peuvent être déplacés indépendamment les uns des autres, de façon à augmenter la gamme de débits d'air dynamique pouvant être prélevés.

Néanmoins, dans certains modes de réalisation préférentiels, une bouche de prélèvement d'air dynamique selon l'invention comporte un volet unique apte à obturer l'ouverture complètement en position de fermeture. Dans ces modes de réalisation, l'invention concerne donc une bouche de prélèvement d'air dynamique comprenant :
- une paroi de peau séparant un espace extérieur susceptible d'être soumis à un flux d'air dynamique et un espace intérieur destiné à recevoir un flux de prélèvement d'air dynamique, ladite paroi de peau présentant une ouverture d'entrée d'air dynamique,
- une conduite s'étendant dans l'espace intérieur à partir de ladite ouverture, ladite conduite étant délimitée par une paroi, dite paroi interne, s'étendant dans l'espace intérieur à partir de ladite ouverture,
- un volet d'ouverture/fermeture de ladite ouverture monté mobile par rapport à l'ouverture entre une position fermée dans laquelle ladite ouverture est obturée, et au moins une position ouverte dans laquelle le volet définit une section non nulle de passage d'air dynamique dans la conduite, ledit volet présentant une face externe orientée vers l'espace extérieur en position fermée, et une face interne orientée vers l'espace intérieur et vers l'intérieur de la conduite (y compris en position ouverte),
caractérisée en ce que :
- le volet est monté mobile par rapport à l'ouverture par au moins une première bielle à laquelle il est articulé selon un premier axe de pivot, et au moins une deuxième bielle à laquelle il est articulé selon un deuxième axe de pivot, les premier et deuxième axes de pivot étant distincts et parallèles entre eux,
- lesdites bielles, le volet, ladite conduite et l'ouverture sont conformés et agencés de telle sorte que, en toute position ouverte, une distance, dite écart extérieur, non nulle sépare la face externe du volet de ladite paroi interne de la conduite.

Dans toute la suite, il est fait référence à un unique volet, étant entendu que les caractéristiques décrites s'appliquent aussi bien à chaque volet dans le cas d'une bouche comprenant plusieurs volets.

La cinématique d'articulation d'un volet par rapport à l'ouverture de prélèvement d'air dynamique par l'intermédiaire d'au moins deux bielles selon deux axes de pivot distincts et l'agencement de ce volet vis-à-vis de la paroi interne de la conduite forment en toute position ouverte un passage d'air de part et d'autre de chacune des deux faces opposées du volet, permettant de réduire les efforts aérodynamiques impartis sur le volet en position ouverte et améliorant les performances aérodynamiques du prélèvement d'air. En effet, une telle cinématique du volet impose un mouvement de type à parallélogramme déformable permettant à la fois de présenter une position fermée dans laquelle le volet peut être conformé pour obturer l'entrée d'air sans discontinuité par rapport à la surface externe de la paroi de peau (et ce y compris avec des formes gauches quelconques de cette surface externe), et de minimiser l'intrusion du volet dans l'air dynamique en position ouverte tout en optimisant le prélèvement d'air et la déviation et le passage de l'air à travers l'ouverture et dans la conduite, et ce sur toute la course de déplacement du volet. Dans certains modes de réalisation conformes à l'invention, le volet est conformé pour obturer l'ouverture d'entrée d'air dynamique sans discontinuité par rapport à la paroi de peau.

Les faces interne et externe du volet étant séparées de la paroi interne de la conduite par des distances non nulles, le volet n'est donc à aucun moment au contact de la paroi interne de la conduite (en toute position ouverte du volet). Plus particulièrement, en toute position ouverte, ladite face externe dudit volet n'est pas en contact avec la paroi interne de la conduite. Ceci permet de laisser passer le flux d'air dynamique à la fois du côté de la face externe du volet et du côté de la face interne du volet, c'est-à-dire de permettre une circulation du flux d'air dynamique au contact de chacune des deux faces principales du volet. Le fait que le flux d'air dynamique prélevé en position ouverte circule non seulement le long de la face interne du volet mais également le long de sa face externe (entre la face externe du volet et la paroi interne de la conduite) à la façon d'une aube réduit la différence de pression de chaque côté du volet, ce qui limite les efforts aérodynamiques subis par le volet sous l'effet de l'air dynamique et la trainée produite par le volet.

L'invention s'applique en particulier à des modes de réalisation de la bouche de prélèvement dans laquelle chaque volet présente un bord d'attaque (bord orienté vers l'amont du flux d'air dynamique s'écoulant le long de ladite paroi de peau, ce bord d'attaque recevant ce flux d'air dynamique) s'étendant, en toute position d'ouverture, dans l'espace extérieur, c'est-à-dire, en fonctionnement, dans le flux d'air dynamique s'écoulant le long de ladite paroi de peau. Ainsi, dans une bouche selon l'invention, les formes et la géométrie du volet et de chaque bielle de guidage de ce dernier sont choisies de façon à respecter cette condition. La bouche selon l'invention est alors une bouche dite intrusive. Il est à noter cependant que dans ces modes de réalisation, du fait de l'amélioration des performances aérodynamiques du prélèvement d'air, l'intrusion du volet dans le flux d'air dynamique, c'est-à-dire la distance de pénétration du bord d'attaque du volet dans l'espace extérieur, peut être minimisée pour un même débit d'air prélevé. Il en résulte une réduction considérable de la traînée correspondante.

Chaque première bielle est par ailleurs elle-même articulée par rapport à un support solidaire de ladite paroi de peau (notamment par rapport à ladite paroi interne de la conduite) selon une liaison pivot autour d'un axe, dit premier axe de bielle, distinct dudit premier axe de pivot et au moins sensiblement parallèle -notamment parallèle- à ce dernier. La première bielle définit une distance constante entre le premier axe de pivot et le premier axe de bielle, cette distance constante constituant la longueur efficace de chaque première bielle dans la cinématique de guidage du volet.

De même, chaque deuxième bielle est par ailleurs elle-même articulée par rapport à un support solidaire de ladite paroi de peau (notamment par rapport à ladite paroi interne de la conduite qui fait alors office de support) selon une liaison pivot autour d'un axe, dit deuxième axe de bielle, distinct dudit deuxième axe de pivot et au moins sensiblement parallèle -notamment parallèle- à ce dernier. La deuxième bielle définit une distance constante entre le deuxième axe de pivot et le deuxième axe de bielle, cette distance constante constituant la longueur efficace de chaque deuxième bielle dans la cinématique de guidage du volet. Dans certains modes de réalisation conformes à l'invention, ledit premier axe de bielle et ledit deuxième axe de bielle sont distincts et parallèles entre eux. En particulier, le premier axe de bielle est décalé vers l'amont (défini par rapport au sens d'écoulement du flux d'air dynamique prélevé dans la conduite) par rapport au deuxième axe de bielle.

Lorsqu'une bouche de prélèvement d'air dynamique selon l'invention est montée sur un véhicule, un flux d'air dynamique s'écoule le long de ladite paroi de peau selon une direction d'écoulement prédéterminée. Il est à noter que ce flux d'air dynamique qui résulte du déplacement du véhicule par rapport à la masse d'air atmosphérique peut être un flux d'air qui s'écoule le long et vers l'arrière de la carrosserie du véhicule lorsque celui-ci se déplace vers l'avant et/ou tout autre flux d'air généré par le déplacement du véhicule, par exemple un flux d'air généré dans un moteur de propulsion du véhicule. Dans une bouche de prélèvement d'air selon l'invention, lesdits premier et deuxième axes de pivot s'étendent transversalement par rapport à -c'est-à-dire orthogonalement à- la direction d'écoulement du flux d'air dynamique le long de ladite paroi de peau en position fermée de chaque volet. De même, lesdits premier et deuxième axes de bielle s'étendent transversalement par rapport à -c'est-à-dire orthogonalement à- la direction d'écoulement du flux d'air dynamique le long de ladite paroi de peau en position fermée de chaque volet.

De même, en position ouverte d'au moins un volet, un flux d'air dynamique est prélevé par la bouche de prélèvement selon l'invention et s'écoule dans la conduite selon une direction générale d'écoulement prédéterminée. Dans une bouche de prélèvement d'air selon l'invention, lesdits premier et deuxième axes de pivot s'étendent transversalement par rapport à -c'est-à-dire orthogonalement à- la direction générale d'écoulement du flux d'air dynamique prélevé dans la conduite en position ouverte d'au moins un volet. De même, lesdits premier et deuxième axes de bielle s'étendent transversalement par rapport à -c'est-à-dire orthogonalement à- la direction générale d'écoulement du flux d'air dynamique prélevé dans la conduite en position ouverte d'au moins un volet.

En outre, lesdits premier et deuxième axes de pivot sont situés dans ledit espace intérieur, à distance non nulle de la face interne du volet. De même, lesdits premier et deuxième axes de bielle sont situés dans ledit espace intérieur, à distance non nulle de la face interne du volet. En outre, les axes de pivot ne sont sécants ni avec l'ouverture ni avec le volet. De même, les axes de bielle ne sont sécants ni avec l'ouverture ni avec le volet.

Cela étant, le positionnement relatif entre les axes de pivot et les axes de bielle peut faire l'objet de nombreuses variantes, mais est de préférence choisi de façon d'une part à éviter tout phénomène de genouillère ou de blocage intempestif, d'autre part pour favoriser la commande des déplacements du volet dans un sens ou dans l'autre.

En particulier, au moins en position ouverte maximale (position ouverte la plus éloignée de la position fermée définissant la section de passage la plus importante) -notamment en toute position ouverte-, la distance entre le premier axe de bielle et la face interne du volet est supérieure à la distance entre le premier axe de pivot et la face interne du volet. De même, au moins en position ouverte maximale -notamment en toute position ouverte-, la distance entre le deuxième axe de bielle et la face interne du volet est supérieure à la distance entre le deuxième axe de pivot et la face interne du volet.

Par ailleurs, il est avantageux de prévoir un agencement tel que la résultante des efforts aérodynamiques impartis sur chaque axe de pivot présente une direction notamment non orthogonale à la direction de la bielle (définie par l'axe de pivot et l'axe de bielle), au moins dans certaines positions du volet, voire dans toutes les positions du volet -notamment lorsque ces efforts aérodynamiques subis par le volet sont de valeur maximum, c'est-à-dire notamment en position ouverte maximale et/ou en position ouverte nominale (position ouverte la plus courante en utilisation) et/ou en position fermée-. L'idéal est alors que la direction de la résultante des efforts aérodynamiques impartis sur l'axe de pivot soit autant que possible parallèle à la direction de la bielle en position ouverte maximale et/ou en position ouverte nominale.

Ainsi, dans certains modes de réalisation avantageux au moins l'un du premier axe de pivot et du deuxième axe de pivot -notamment chaque axe de pivot- est, au moins en position ouverte maximale et/ou en position ouverte nominale et/ou en position fermée -notamment en toute position du volet-, décalé vers l'amont (défini par rapport au sens de circulation du flux d'air dynamique par la conduite) par rapport à l'axe de bielle correspondant, c'est-à-dire par rapport au premier axe de bielle ou, respectivement, par rapport au deuxième axe de bielle. De la sorte, le couple de rotation imparti par le flux d'air dynamique sur la bielle correspondante est réduit du fait de l'angle ainsi formé entre la résultante des efforts dynamiques impartis au niveau de l'axe de pivot et la direction de la bielle (définie par l'axe de pivot et l'axe de bielle).

En variante ou en combinaison, au moins l'un du premier axe de pivot et du deuxième axe de pivot-notamment chaque axe de pivot- est, au moins en position ouverte maximale et/ou en position ouverte nominale et/ou en position fermée -notamment en toute position du volet-, décalé vers l'aval (défini par rapport au sens de circulation du flux d'air dynamique par la conduite) par rapport à l'axe de bielle correspondant, c'est-à-dire par rapport au premier axe de bielle ou, respectivement, par rapport au deuxième axe de bielle. De la sorte, le couple de rotation imparti par le flux d'air dynamique sur la bielle correspondante est réduit du fait de l'angle ainsi formé entre la résultante des efforts dynamiques impartis au niveau de l'axe de pivot et la direction de la bielle (définie par l'axe de pivot et l'axe de bielle).

Les deux axes de pivot peuvent être décalés dans le même sens (vers l'amont ou vers l'aval) par rapport aux deux axes de bielle correspondants. Rien n'empêche cependant de prévoir que les deux axes de pivot soient décalés en sens contraires, l'un vers l'amont, l'autre vers l'aval, par rapport aux deux axes de bielle correspondants dès lors que les amplitudes de pivotement des bielles sont compatibles et permettent un déplacement du volet sur toute l'amplitude de déplacement requise.

Dans certains modes de réalisation conformes à l'invention, la bouche comprend au moins un actionneur adapté pour pouvoir entrainer en rotation et pour pouvoir bloquer en rotation au moins l'une desdites première et deuxième bielles, de façon à pouvoir entraîner chaque volet en déplacement entre les positions fermée et ouverte et réciproquement, et à pouvoir bloquer chaque volet en position après déplacement. Un tel actionneur peut être choisi et agencé pour pouvoir entraîner une bielle (ou un arbre s'étendant selon l'axe de bielle et portant une pluralité de bielles parallèles) en rotation autour de l'axe de bielle par rapport audit support. En variante ou en combinaison, rien n'empêche de prévoir un actionneur choisi et agencé pour pouvoir entraîner une bielle (ou un arbre s'étendant selon l'axe de bielle et portant une pluralité de bielles parallèles) en rotation autour de l'axe de pivot par rapport au volet. Un tel actionneur peut être formé avantageusement d'un moteur rotatif, notamment choisi parmi les moteurs électriques, les moteurs pneumatiques et les moteurs hydrauliques. Rien n'empêche de prévoir un actionneur linéaire tel qu'un vérin, par exemple interposé entre ledit support et ledit volet, ou entre ledit support et l'une au moins des bielles, ou entre ledit volet et l'une au moins des bielles. De préférence, dans une bouche de prélèvement d'air selon l'invention chaque volet est entraîné en déplacement par un unique actionneur. Il est à noter à ce titre que du fait de la réduction des contraintes mécaniques subies par le volet en toute position d'ouverture, l'invention permet de réduire d'autant les performances nécessaires de l'actionneur, et donc également son coût, sa masse et son encombrement.

Le volet peut être articulé à une seule première bielle et à une seule deuxième bielle, ou au contraire selon le même premier axe de pivot à plusieurs premières bielles et selon le même deuxième axe de pivot à plusieurs deuxièmes bielles. Divers modes de réalisation peuvent être envisagés en ce qui concerne le nombre de bielles guidant le volet par rapport à l'ouverture. Dans certains modes de réalisation conformes à l'invention, ledit volet est articulé par rapport à au moins un support -notamment par rapport à la conduite- par quatre bielles, à savoir une paire de premières bielles parallèles entre elles et une paire de deuxièmes bielles parallèles entre elles. Les deux bielles d'une même paire de bielles sont écartées transversalement l'une de l'autre, c'est-à-dire dans la direction des axes de pivot, notamment placées de chaque côté du volet.

Dans certains modes de réalisation conformes à l'invention, ledit volet présente une pluralité (continue ou discrète) de positions ouvertes permettant de faire varier (continûment ou de façon discontinue) la section de passage de l'air dynamique prélevé dans la conduite, et donc le débit d'air dynamique prélevé. Les différentes positions du volet sont définies par chaque actionneur et/ou par le mécanisme de guidage du volet par rapport à la paroi de peau, c'est-à-dire notamment par exemple par les possibilités de mouvement en rotation des bielles par rapport audit support et/ou par rapport au volet. La bouche selon l'invention permet ainsi un ajustement du débit d'air dynamique prélevé en fonction des besoins du véhicule et/ou des conditions de déplacement du véhicule dans la masse d'air atmosphérique, notamment en fonction des conditions de vol dans le cas d'un aéronef (descente, croisière, stationnement...).

Dans certains modes de réalisation conformes à l'invention, ladite paroi interne de la conduite présente au moins une portion courbe convexe, ladite portion courbe convexe étant disposée en regard de la face interne dudit volet en position d'ouverture, la convexité de ladite portion courbe convexe étant orientée vers la face interne du volet. La présence d'une telle portion courbe convexe contribue également à favoriser la déviation du flux d'air dynamique prélevé et les performances aérodynamiques du prélèvement d'air dynamique. En particulier, dans certains modes de réalisation, cette portion courbe convexe s'étend à partir d'un bord, dit bord avant, de l'ouverture destinée à être situé le plus vers l'avant du véhicule lorsque la bouche selon l'invention est montée sur le véhicule. Ainsi, ladite portion courbe convexe constitue une portion, dite portion avant, de la paroi interne définissant en toute section droite transversale de cette paroi interne, la partie de cette section droite transversale destinée à être située le plus vers l'avant du véhicule.

En outre ladite portion courbe convexe et le volet sont conformés et agencés, et la cinématique de déplacement du volet par rapport à l'ouverture est adaptée de telle sorte qu'en toute position d'ouverture, la face interne du volet définissant une section minimale de passage d'air entre la face interne et la portion courbe convexe, ladite face interne présentant dans tout plan perpendiculaire aux axes de pivot (et aux axes de bielle), une tangente en un point correspondant à ladite section minimale de passage d'air, ladite portion courbe convexe présentant dans tout plan perpendiculaire aux axes de pivot et aux axes de bielle, une tangente en un point correspondant à ladite section minimale de passage d'air, ladite tangente à la face interne est au moins sensiblement parallèle à ladite tangente à cette portion courbe convexe. (L'expression « au moins sensiblement » indique, de façon habituelle, qu'une caractéristique structurelle telle qu'une valeur, ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré.)

Une telle cinématique permet de favoriser l'écoulement de l'air dans la conduite dans un régime aussi laminaire que possible, au moins entre la face interne et ladite portion courbe convexe, et donc de réduire d'autant plus les efforts aérodynamiques et les contraintes subies par le volet et son actionneur.

La portion arrière et les portions latérales de la paroi interne peuvent présenter toutes formes compatibles avec les déplacements du volet. La portion arrière et les portions latérales de la paroi interne de la conduite peuvent présenter des portions planes et/ou courbes. La conduite peut présenter une section droite transversale au moins partiellement courbe (notamment circulaire) et/ou au moins partiellement polygonale. Le rapport entre la distance entre la face externe du volet et la portion arrière de la paroi interne, et la distance entre la face interne du volet et la portion courbe convexe en position ouverte peut varier, ce rapport est, dans certains modes de réalisation selon l'invention, inférieur à 1. L'invention permet aussi, grâce à la modularité de la cinématique du volet que ce rapport soit supérieur à 1, la distance entre la face externe du volet et la portion arrière de la paroi interne étant alors supérieure à la face interne du volet et la portion courbe convexe en position ouverte. Les débits d'air prélevé de part et d'autre des faces externe et interne du volet peuvent également varier notamment en fonction de ces distances.

Différentes formes de réalisation peuvent être envisagées concernant le volet. Le volet peut être sensiblement plan ou courbe ou gauche, la face externe et/ou la face interne pouvant être choisies parmi les surfaces planes, les surfaces réglées (notamment dont la directrice est parallèle à la direction du flux d'air dynamique), et les surfaces gauches. En particulier, la forme de la face externe du volet est déterminée en fonction de la forme de ladite paroi de peau, c'est-à-dire également de la carrosserie du véhicule à l'endroit où la bouche de prélèvement est susceptible d'être installée, de façon à minimiser la trainée. Il est à noter à ce titre que l'invention permet précisément l'adaptation de la forme du volet à toute forme de paroi de peau et de surface externe du véhicule tout en permettant d'optimiser le prélèvement d'air et de minimiser les contraintes mécaniques subies par le volet en position ouverte. Dans certains modes de réalisation conformes à l'invention, ledit volet est formé d'une plaque -notamment d'une plaque plane- reliée auxdites bielles. Le volet peut être relié auxdites bielles par des flancs contribuant à guider le flux d'air entrant dans la conduite en position d'ouverture.

Le contour de chaque volet est adapté pour pouvoir correspondre au contour de l'ouverture. L'ouverture et chaque volet peuvent présenter un contour quelconque, par exemple un contour au moins pour partie polygonal -notamment rectangulaire ou encore hexagonal- et/ou un contour au moins pour partie courbe -circulaire ou ovale par exemple-. Dans certains modes de réalisation conformes à l'invention, le volet présente un contour globalement rectangulaire.

Dans certains modes de réalisation conformes à l'invention, en position fermée, la face externe du volet affleure la paroi de peau. Plus particulièrement, en position fermée, la face externe du volet est disposée dans l'ouverture dans le prolongement en continuité avec ladite paroi de peau, c'est-à-dire de la surface externe de la carrosserie du véhicule, par exemple le fuselage d'un aéronef ou une paroi de carter d'un moteur d'aéronef. En particulier, en position fermée la face externe du volet ne présente ni arête ni saillie vers l'espace extérieur, ni renfoncement vers l'espace intérieur.

Dans certains modes de réalisation conformes à l'invention, une section de la face externe du volet par tout plan sécant à ladite face externe et parallèle au flux d'air dynamique étant une ligne présentant un point, dit point amont,disposé dans l'espace extérieur en position ouverte, et un point, dit point aval, disposé dans l'espace intérieur en position ouverte par rapport audit flux d'air dynamique, points par lesquels passent une droite, dite orientation du volet, l'orientation du volet en position fermée et l'orientation du volet en toute position ouverte forment un angle α inférieur à 50°. En position ouverte maximale et/ou en position ouverte nominale, ledit angle α est compris entre 20° et 50°, en particulier compris entre 20° et 45°, et plus particulièrement compris entre 25° et 35°.

Dans une bouche de prélèvement d'air dynamique selon l'invention, ladite conduite s'étend à partir de l'ouverture globalement -notamment exclusivement- vers l'arrière du véhicule lorsque la bouche est montée sur le véhicule, c'est-à-dire globalement -notamment exclusivement- vers l'aval par rapport à la direction d'écoulement du flux d'air dynamique le long de ladite paroi de peau, tout en présentant une certaine inclinaison vers l'espace intérieur pour orienter le flux d'air dynamique prélevé vers cet espace intérieur afin de l'alimenter vers un dispositif interne du véhicule où ce flux d'air dynamique prélevé est utilisé. Ainsi, le flux d'air dynamique prélevé ne présente en aucun endroit de la conduite une composante de direction vers l'avant du véhicule ou vers l'amont de la direction d'écoulement du flux d'air dynamique le long de ladite paroi de peau. Dans certains modes de réalisation conformes à l'invention, ladite conduite s'étend à partir de l'ouverture selon une direction générale formant un angle inférieur à 50°, et en particulier inférieur à 30°, avec l'orientation du volet en une position ouverte maximale. Dans certains modes de réalisation conformes à l'invention, ladite paroi interne de la conduite est telle que la direction d'écoulement du flux d'air dynamique prélevé dans la conduite forme, par rapport à la surface de la paroi de peau de la bouche de prélèvement d'air dynamique, un angle inférieur à 90°, et plus particulièrement un angle inférieur à 50°, par exemple de l'ordre de 20° à 30°.

La cinématique de chaque volet d'une bouche de prélèvement selon l'invention est telle qu'à partir de la position fermée, le volet se déplace de telle sorte que son inclinaison se rapproche, au fur et à mesure de son ouverture, de la direction générale de la conduite. L'angle entre l'orientation du volet et la direction générale de la conduite diminue donc au fur et à mesure de l'ouverture du volet à partir de la position fermée.

L'invention s'étend également à un dispositif de contrôle environnemental caractérisé en ce qu'il comprend une telle bouche ainsi qu'à un moteur de propulsion d'aéronef -notamment choisi parmi les turboréacteurs et les turbopropulseurs- muni d'une bouche de prélèvement d'air dynamique selon l'invention.

L'invention concerne également un véhicule comprenant une bouche de prélèvement d'air dynamique selon l'invention. Il peut s'agir d'un véhicule automobile choisi parmi les véhicules routiers, les véhicules ferroviaires (notamment les trains à grande vitesse), les véhicules aériens (principalement les aéronefs). Il peut s'agir d'un véhicule de transport de personnes et/ou de matériel et/ou de matériaux, ou d'un véhicule à usage technique.

L'invention concerne en particulier un aéronef comprenant une bouche de prélèvement d'air dynamique selon l'invention.

L'invention concerne également une bouche, un dispositif de contrôle environnemental et un véhicule -notamment un aéronef- caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 est une vue en perspective d'une bouche selon l'invention,
- la figure 2 est une vue en coupe longitudinale d'une bouche selon l'invention représentée en figure 1 dans une première position d'ouverture du volet,
- la figure 3 est une vue en coupe longitudinale d'une bouche selon l'invention représentée en figure 1 dans une deuxième position d'ouverture du volet,
- la figure 4 est une vue en coupe longitudinale d'une bouche selon l'invention représentée en figure 1 dans une position de fermeture du volet,
- la figure 5 est une vue en perspective d'un aéronef équipé de deux bouches de prélèvement d'air dynamique selon l'invention,
- la figure 6 est une vue en coupe longitudinale d'un moteur de propulsion d'aéronef équipé d'une bouche selon l'invention.

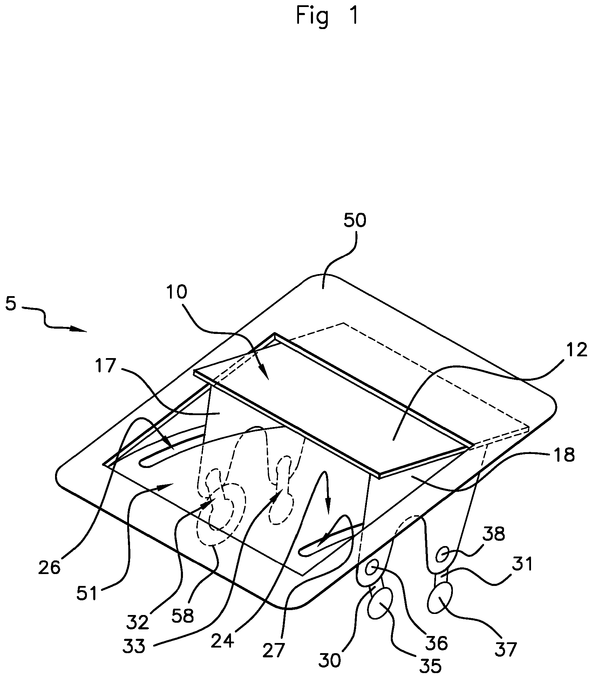

Une bouche 5 de prélèvement d'air dynamique selon l'invention telle que représentée aux figures 1 à 4 comprend :
- une paroi de peau 50 séparant un espace extérieur 52 susceptible d'être soumis à un flux d'air dynamique et un espace intérieur 53 destiné à recevoir un flux de prélèvement d'air dynamique, la paroi de peau 50 présentant une ouverture 51 d'entrée d'air dynamique,
- une conduite 20 s'étendant dans l'espace intérieur 53 à partir de l'ouverture 51, la conduite 20 étant délimitée par une paroi interne 22, fixe par rapport à la paroi de peau 50 et s'étendant dans l'espace intérieur 53 à partir de l'ouverture 51,
- un volet 10 d'ouverture/fermeture de l'ouverture 51, le volet 10 étant monté mobile par rapport à l'ouverture 51 entre une position fermée dans laquelle le volet 10 obture l'ouverture 51, et au moins une position ouverte dans laquelle le volet 10 définit une section minimale non nulle de passage d'air dynamique dans la conduite 20, le volet 10 présentant une face externe 12 orientée vers l'espace extérieur 52 en position fermée, et une face interne 13 orientée vers l'espace intérieur 53 et vers l'intérieur de la conduite 20.

Une telle bouche de prélèvement d'air dynamique est adaptée pour pouvoir être agencée au travers de la carrosserie d'un véhicule, en particulier du fuselage d'un aéronef. La paroi de peau 50 est définie par un cadre appliqué sur la carrosserie d'un véhicule, ou par la carrosserie elle-même.

Le volet 10 est monté mobile par rapport à l'ouverture 51 par une première bielle 30, 32 à laquelle il est articulé selon un premier axe 36 de pivot, et une deuxième bielle 31, 33 à laquelle il est articulé selon un deuxième axe 38 de pivot, les premier et deuxième axes 36, 38 de pivot étant distincts et parallèles entre eux.

Le volet 10, les bielles 30, 31, 32, 33, les axes 36, 38 de pivot, la conduite 20 et l'ouverture 51 sont conformés et agencés de telle sorte que, en toute position ouverte :
- une distance, dite écart extérieur, non nulle sépare la face externe 12 du volet 10 de la paroi interne 22 de la conduite 20, et
- une distance, dite écart intérieur, non nulle sépare la face interne 13 du volet 10 de la paroi interne 22 de la conduite 20.

En toute position ouverte, le volet n'est pas en contact avec la paroi interne de la conduite, c'est-à-dire ni sa face externe 12, ni sa face interne 13. En d'autres termes, en toute position ouverte du volet, une distance non nulle sépare tout point de la face externe 12 du volet 10 de la paroi interne 22 de la conduite 20, et tout point de la face interne 13 du volet 10 de la paroi interne 22 de la conduite 20.

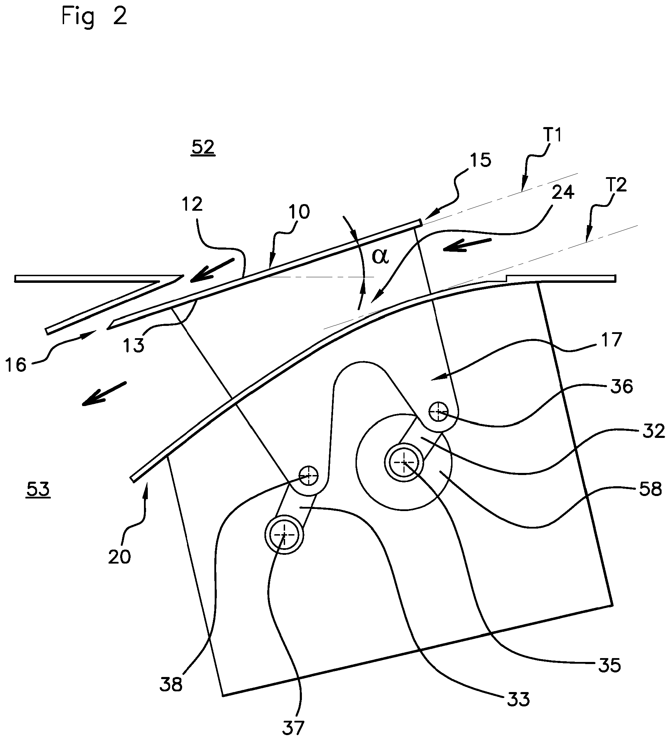

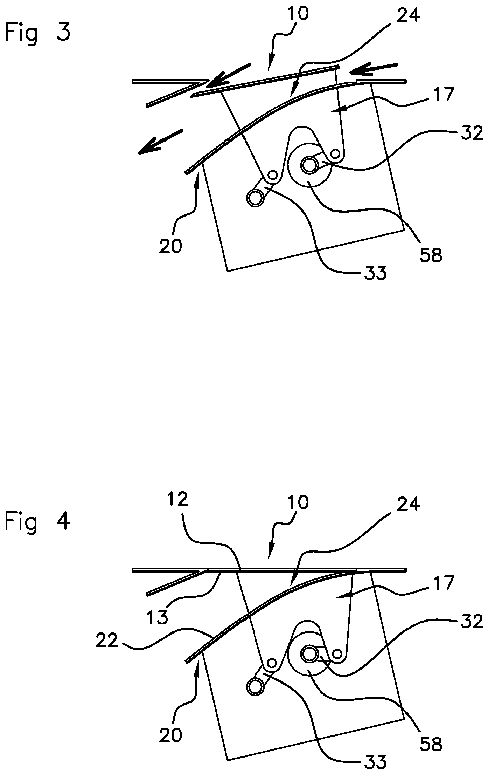

Ainsi, comme on peut le voir sur les figures 2 et 3 en coupe de la bouche de prélèvement, en position d'ouverture, une portion du flux d'air entrant dans la conduite d'air dynamique passe au-dessus de la face externe du volet 10 comme l'illustre les flèches représentées sur ces figures.

La cinématique d'articulation du volet par rapport à l'ouverture de prélèvement d'air dynamique par l'intermédiaire d'au moins deux bielles selon deux axes de pivot distincts permet, en toute position ouverte, un passage d'air de part et d'autre de chacune des deux faces opposées du volet. Ceci permet de réduire les efforts aérodynamiques impartis sur le volet en position ouverte et d'améliorer les performances aérodynamiques du prélèvement d'air.

Le volet 10 se présente sous la forme d'une plaque plane de forme sensiblement carrée mais peut également prendre toute autre forme adaptée à la forme de l'entrée d'air de la conduite d'air. Le volet 10 présente un bord d'attaque 15 (bord orienté vers l'amont du flux d'air dynamique s'écoulant le long de ladite paroi de peau) et un bord de fuite 16, le bord d'attaque 15 étant disposé en saillie de la conduite 20 (c'est-à-dire disposé dans l'espace extérieur 52) lorsque le volet est en position d'ouverture. Il s'agit donc d'un volet de type intrusif. Toutefois, en toute position d'ouverture, au moins une portion du volet est disposée dans l'espace intérieur 53 de la bouche de prélèvement d'air dynamique. La surface des faces externe et interne du volet est plane. Toutefois, des nervures permettant d'optimiser l'écoulement du flux d'air peuvent également être prévues en surface de la face externe et/ou de la face interne du volet 10.

En particulier, comme on peut le voir sur les figures 1, 2 et 3, en toute position d'ouverture, on peut noter que le bord de fuite 16 du volet 10 se situe à l'intérieur de la conduite 20, c'est-à-dire dans l'espace intérieur 53 de la bouche de prélèvement d'air dynamique.

Chaque bielle présente une extrémité assemblée solidaire en rotation au volet 10 et une autre extrémité assemblée fixement à la conduite 20 ou à un élément relié à la conduite. Les bielles 30, 31, 32, 33 sont des tiges rigides. Chaque bielle présente un axe de pivot et un axe de bielle. La première bielle 33 présente un premier axe de pivot 36 et un premier axe de bielle 35. De même, la deuxième bielle 32 présente un deuxième axe de pivot 38 et un deuxième axe de bielle 37. Les bielles peuvent présenter des longueurs sensiblement identiques. Les bielles 30, 32 et 31, 33 peuvent également présenter des longueurs distinctes tout en permettant de procurer au volet 10 une cinématique permettant l'ouverture et la fermeture de la bouche de prélèvement avec un passage partiel du flux d'air entrant entre la face externe 12 du volet et la paroi interne 22.

Les premier et deuxième axes 36, 38 de pivot s'étendent orthogonalement à la direction d'écoulement du flux d'air dynamique le long de la paroi de peau en position fermée du volet. De même, lesdits premier et deuxième axes de bielle 35, 37 s'étendent orthogonalement à la direction d'écoulement du flux d'air dynamique le long de la paroi de peau en position fermée du volet.

De même, en position ouverte, un flux d'air dynamique est prélevé par la bouche de prélèvement et s'écoule dans la conduite selon une direction générale d'écoulement prédéterminée. Les premier et deuxième axes de pivot 36, 38 s'étendent orthogonalement à la direction générale d'écoulement du flux d'air dynamique prélevé dans la conduite en position ouverte du volet. De même, les premier et deuxième axes de bielle 35, 37 s'étendent orthogonalement à la direction générale d'écoulement du flux d'air dynamique prélevé dans la conduite en position ouverte du volet 10.

En outre, les premier et deuxième axes 36, 38 de pivot sont situés dans ledit espace intérieur 53, à distance non nulle de la face interne 13 du volet. De même, lesdits premier et deuxième axes 35, 37 de bielle sont situés dans ledit espace intérieur 53, à distance non nulle de la face interne 13 du volet. En outre, les axes de pivot 36, 38 ne sont sécants ni avec l'ouverture 51 ni avec le volet 10. De même, les axes de bielle 35, 37 ne sont sécants ni avec l'ouverture 51 ni avec le volet 10.

Comme illustré sur les figures 2 à 4, les bielles 30, 31, 32, 33 et le volet 10 sont agencés de telle sorte que la résultante des efforts aérodynamiques impartis sur chaque axe de pivot présente une direction non orthogonale à la direction de la bielle, notamment lorsque les efforts aérodynamiques subis par le volet sont de valeur maximum, c'est-à-dire notamment en position ouverte maximale.

Le volet 10 est relié aux bielles 30, 31, 32, 33 par deux flancs 17, 18 plans contribuant à guider le flux d'air entrant.

La paroi interne de la conduite 20 présente au moins une portion courbe convexe 24, la portion courbe convexe étant disposée en regard de la face interne du volet en position d'ouverture, la convexité de la portion courbe convexe 224 étant orientée vers la face interne 13 du volet. La portion courbe convexe 24 s'étend à partir d'un bord avant de l'ouverture destinée à être situé le plus vers l'avant du véhicule lorsque la bouche selon l'invention est montée sur le véhicule. Ainsi, ladite portion courbe convexe 24 constitue une portion avant de la paroi interne définissant en toute section droite transversale de cette paroi interne, la partie de cette section droite transversale destinée à être située le plus vers l'avant du véhicule. En position d'ouverture, la face interne 13 du volet est parallèle à une tangente T2 à la portion 24 courbe convexe de la conduite 20, la face interne 13 du volet définissant une section minimale de passage d'air entre la face interne et la portion courbe convexe 24, la face interne présentant dans tout plan perpendiculaire aux axes de pivot 36, 38, une tangente T1 en un point correspondant à la section minimale de passage d'air.

En particulier, les parois de la conduite sont configurées de sorte que le flux d'air entrant dans la conduite ne circule pas dans un sens rétrograde par rapport à son sens de circulation initial sur la surface externe du véhicule. Dans l'exemple illustré aux figures 1 à 3, la portion 24 courbe convexe de la conduite est donc disposée du côté du bord d'attaque 15 du volet, soit du côté amont du flux d'air et, d'autre part, la portion de la paroi interne 22 de la conduite 20 disposée en face de la portion 24 courbe convexe, c'est-à-dire la portion disposée du côté du bord de fuite 16 du volet en position fermée forme un angle inférieur à 90°, notamment inférieur à 60°, avec la surface du cadre 50 de la bouche de prélèvement disposée du côté du bord de fuite 16 du volet 10. La conduite 20 s'étend donc à partir de l'ouverture exclusivement vers l'arrière du véhicule lorsque la bouche est montée sur un véhicule, c'est-à-dire exclusivement vers l'aval par rapport à la direction d'écoulement du flux d'air dynamique le long de la paroi de peau, tout en présentant une certaine inclinaison vers l'espace intérieur 53 pour orienter le flux d'air dynamique prélevé vers cet espace intérieur. La conduite 20 s'étend à partir de l'ouverture 51 selon une orientation générale formant un angle inférieur à 30° et en particulier sensiblement parallèle avec l'orientation du volet en position ouverte maximale. En position ouverte, le volet 10 présente donc une inclinaison correspondant à l'orientation générale de la conduite 20.

En position ouverte maximale (proche de la position représentée en figure 2), la surface du volet forme un angle α compris entre 20° et 50°, notamment compris entre 20° et 45°, et plus particulièrement compris entre 25° et 35°, avec la surface du cadre 50 (ou de la tangente à la surface du bâti du véhicule directement adjacente à l'ouverture du côté du bord d'attaque 15 du volet 10 en position fermée).

Deux fentes 26, 26 sont ménagées dans la portion 24 courbe convexe de la conduite 20 de façon à permettre le déplacement des flancs 17, 18 fixés au volet et aux extrémités desquels sont assemblées les bielles 30, 31, 32, 33.

Dans le mode de réalisation représenté aux figures 1 à 4, un actionneur 58 formé d'un moteur rotatif électrique permet d'entrainer en rotation la première bielle 32 ainsi que de la bloquer en rotation. L'actionneur 58 peut être électrique et/ou électromagnétique et/ou pneumatique et/ou hydraulique ou autre. Il peut éventuellement être commandé par une unité de commande régulant le fonctionnement de l'actionneur, et donc le déplacement du volet en fonction de différentes données telles que par exemple la vitesse, la température de l'air extérieur, la pression, l'hygrométrie... L'actionneur 58 ou un deuxième actionneur pourrait également entrainer l'autre première bielle 30 et/ou un ou plusieurs autres actionneurs entrainer les deuxièmes bielles 31, 33.

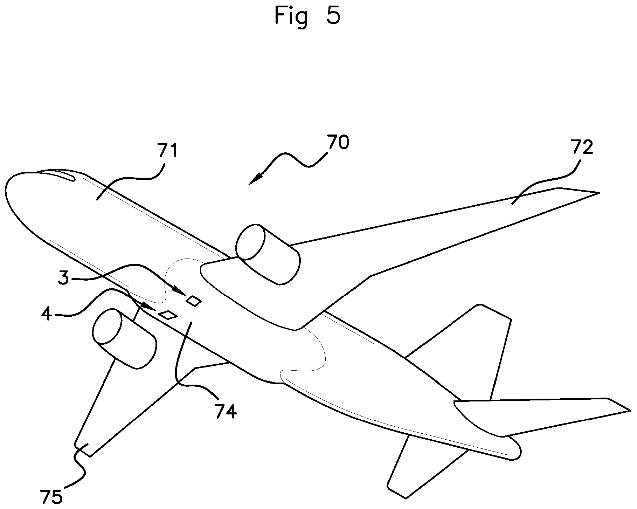

Une telle bouche de prélèvement d'air dynamique selon l'invention peut par exemple être reliée à un dispositif de contrôle environnemental (« ECS », « *Environmental Control System* ») d'aéronef. La figure 5 représente un aéronef 70 muni d'une première bouche 3 et d'une deuxième bouche 4 de prélèvement d'air dynamique. L'aéronef 70 présente un fuselage 71 en contact avec le milieu extérieur. Les bouches 3, 4 de prélèvement d'air dynamique sont disposées sur la partie inférieure 74 du fuselage 71 s'étendant entre les ailes 72 et 75 de l'aéronef 70. Un flux d'air dynamique résultant du déplacement de l'aéronef 70 par rapport à la masse d'air atmosphérique s'écoule le long du fuselage 71 et vers l'arrière du fuselage 71 lorsque celui-ci se déplace vers l'avant.

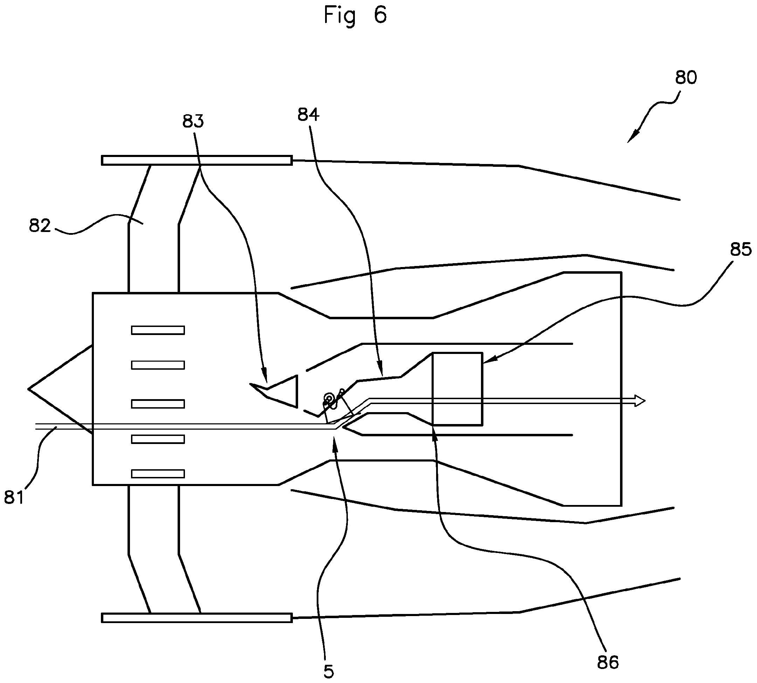

La figure 6 représente un turbopropulseur 80 comprenant un compresseur 82 rotatif axial muni d'hélices. Le turbopropulseur 80 comprend un pré-refroidisseur 85 fixée à une structure 86 et présentant une ouverture munie d'une bouche 5 de prélèvement d'air dynamique dont la conduite 84 forme un diffuseur. Le refroidisseur 85 est également muni, à son extrémité amont par rapport au flux d'air dynamique (représenté par une flèche 81 sur la figure 6), d'un séparateur 83. La bouche 5 de prélèvement d'air dynamique est représentée sur la figure 6 avec le volet en position ouverte. Comme on peut le constater sur la figure 6, les premier et deuxième axes 36, 38 de pivot s'étendent transversalement par rapport à la direction générale d'écoulement du flux d'air dynamique prélevé dans la conduite en position ouverte du volet. De même, les premier et deuxième axes 35, 37 de bielle s'étendent transversalement par rapport à la direction générale d'écoulement du flux d'air dynamique prélevé dans la conduite en position ouverte du volet.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, le volet peut présenter une surface externe non plane pouvant suivre la courbure du fuselage d'un aéronef. D'autre part, une bouche de prélèvement d'air selon l'invention peut également constituer une bouche de prélèvement d'air sur un moteur de propulsion du véhicule -notamment sur une paroi de turboréacteur ou de turbopropulseur le long de laquelle s'écoule un flux d'air dynamique-.

## Revendications

1. - Bouche (5) de prélèvement d'air dynamique comprenant :
- une paroi de peau (50) séparant un espace extérieur (52) susceptible d'être soumis à un flux d'air dynamique et un espace intérieur (53) destiné à recevoir un flux de prélèvement d'air dynamique, ladite paroi de peau (50) présentant une ouverture (51) d'entrée d'air dynamique,
- une conduite (20) s'étendant dans l'espace intérieur (53) à partir de ladite ouverture (51), ladite conduite (20) étant délimitée par une paroi, dite paroi interne (22), fixe par rapport à ladite paroi de peau (50) et s'étendant dans l'espace intérieur (53) à partir de ladite ouverture (51),
- au moins un volet (10) d'ouverture/fermeture de ladite ouverture (51), chaque volet (10) étant monté mobile par rapport à l'ouverture (51) entre une position fermée dans laquelle ledit volet (10) obture au moins une partie de ladite ouverture (51), et au moins une position ouverte dans laquelle ledit volet (10) définit une section non nulle de passage d'air dynamique dans la conduite (20), ledit volet (10) présentant une face externe (12) orientée vers l'espace extérieur (52) en position fermée, et une face interne (13) orientée vers l'espace intérieur (53) et vers l'intérieur de la conduite (20),
- chaque volet (10) est monté mobile par rapport à l'ouverture (51) par au moins une première bielle (30, 32) à laquelle il est articulé selon un premier axe (36) de pivot, et au moins une deuxième bielle (31, 33) à laquelle il est articulé selon un deuxième axe (38) de pivot, les premier et deuxième axes (36, 38) de pivot étant distincts et parallèles entre eux,
- chaque volet (10), lesdites bielles (30, 31, 32, 33), les axes (36, 38) de pivot, ladite conduite (20) et l'ouverture (51) sont conformés et agencés de telle sorte que, en toute position ouverte, une distance, dite écart extérieur, non nulle sépare la face externe (12) de chaque volet (10) de ladite paroi interne (22) de la conduite (20), chaque volet n'étant pas au contact de ladite paroi interne de la conduite en toute position ouverte, **caractérisée en ce que** :
- la cinématique du volet (10) étant adaptée pour permettre, en toute position ouverte, l'écoulement d'un flux d'air dynamique non nul le long de la face externe (12) de chaque volet (10) dans la conduite et l'écoulement d'un flux d'air dynamique non nul le long de la face interne (13) de chaque volet (10) dans la conduite.

2. - Bouche selon la revendication 1, **caractérisée en ce que** ladite paroi interne (22) de la conduite (20) présente au moins une portion (24) courbe convexe, ladite portion courbe convexe étant disposée en regard de la face interne (13) dudit volet en position ouverte, la convexité de ladite portion courbe convexe (24) étant orientée vers la face interne (13) du volet.

3. - Bouche selon la revendication 2, **caractérisée en ce que** ladite portion courbe convexe (24) et le volet (10) sont conformés et agencés, et la cinématique de déplacement du volet par rapport à l'ouverture (51) est adaptée de telle sorte qu'en toute position ouverte, la face interne (13) du volet définissant une section minimale de passage d'air entre la face interne et la portion courbe convexe (24), ladite face interne présentant dans tout plan perpendiculaire aux axes de pivot (36, 38) une tangente (T1) en un point correspondant à ladite section minimale de passage d'air, ladite portion courbe convexe (24) présentant dans tout plan perpendiculaire aux axes de pivot (36, 38), une tangente (T2) en un point de ladite section minimale de passage d'air, ladite tangente (T1) à la face interne (13) est au moins sensiblement parallèle à ladite tangente (T2) à la portion courbe convexe (24).

4. - Bouche selon l'une des revendications 1 à 3, **caractérisée en ce que** chaque première bielle (30, 32) est articulée par rapport à un support solidaire de ladite paroi de peau (50) selon une liaison pivot autour d'un axe, dit premier axe (35) de bielle, distinct dudit premier axe (36) de pivot et au moins sensiblement parallèle à ce dernier et **en ce que** chaque deuxième bielle (31, 33) est articulée par rapport à un support solidaire de ladite paroi de peau (50) selon une liaison pivot autour d'un axe, dit deuxième axe (37) de bielle, distinct dudit deuxième axe (38) de pivot et au moins sensiblement parallèle à ce dernier.

5. - Bouche selon l'une des revendications 1 à 4, **caractérisée en ce qu'**elle comprend au moins un actionneur (58) adapté pour pouvoir entrainer en rotation et pour pouvoir bloquer en rotation au moins l'une desdites première et deuxième bielles (30, 31, 32, 33), de façon à pouvoir entraîner chaque volet (10) en déplacement entre les positions fermée et ouverte, et à pouvoir bloquer chaque volet (10) en position après déplacement.

6. - Bouche selon l'une des revendications 1 à 5 **caractérisée en ce que** ledit volet (10) est articulé par rapport à la conduite (20) par quatre bielles (30, 31, 32, 33), une paire de premières bielles (30, 32) étant parallèles entre elles et une paire de deuxièmes bielles (31, 33) étant parallèles entre elles.

7. - Bouche selon l'une des revendications 1 à 6, **caractérisée en ce que** ledit volet (10) présente une pluralité de positions ouvertes permettant de faire varier la section de passage d'air dynamique dans la conduite.

8. - Bouche selon l'une des revendications 1 à 7, **caractérisée en ce que**, une section de la face externe (12) du volet (10) par tout plan sécant à ladite face externe (12) et parallèle au flux d'air dynamique étant une ligne présentant un point, dit point amont, disposé dans l'espace extérieur (52) en position ouverte et un point, dit point aval, disposé dans l'espace intérieur (53) en position ouverte, points par lesquels passent une droite, dite orientation du volet, l'orientation du volet en position fermée et l'orientation du volet en toute position ouverte forment un angle (α) inférieur à 50°.

9. - Bouche selon l'une des revendications 1 à 8, **caractérisée en ce que** ladite conduite (20) s'étend à partir de l'ouverture (51) selon une direction générale formant un angle inférieur à 30° avec l'orientation du volet en une position ouverte maximale.

10. - Bouche selon l'une des revendications 1 à 9, **caractérisée en ce que** chaque volet (10) présente un bord d'attaque (15) s'étendant, en toute position ouverte, dans l'espace extérieur (52).

11. - Bouche selon l'une des revendications 1 à 10, **caractérisée en ce que** le volet (10) est conformé pour obturer l'ouverture (51) d'entrée d'air dynamique sans discontinuité par rapport à la paroi de peau (50).

12. - Dispositif de contrôle environnemental **caractérisé en ce qu'**il comprend au moins une bouche (5) de prélèvement d'air dynamique selon l'une des revendications 1 à 11.

13. - Moteur (80) de propulsion d'aéronef **caractérisé en ce qu'**il comprend au moins une bouche (5) de prélèvement d'air dynamique selon l'une des revendications 1 à 11.

14. - Véhicule **caractérisé en ce qu'**il comprend au moins une bouche (5) de prélèvement d'air dynamique selon l'une des revendications 1 à 11.

15. - Aéronef (70) **caractérisé en ce qu'**il comprend au moins une bouche (5) de prélèvement d'air dynamique selon l'une des revendications 1 à 11.

## Patentansprüche

1. Staulufteinlass (5), welcher umfasst:
- eine Hautwand (50), die einen Außenraum (52), der einem Stauluftstrom ausgesetzt sein kann, und einen Innenraum (53), der dazu bestimmt ist, einen Stauluftentnahmestrom aufzunehmen, trennt, wobei die Hautwand (50) eine Staulufteinlassöffnung (51) aufweist,
- eine Leitung (20), die sich von der Öffnung (51) aus im Innenraum (53) erstreckt, wobei die Leitung (20) von einer Wand, Innenwand (22) genannt, begrenzt wird, die in Bezug auf die Hautwand (50) ortsfest ist und sich im Innenraum (53) von der Öffnung (51) aus erstreckt,
- mindestens eine Klappe (10) zum Öffnen/Schließen der Öffnung (51), wobei jede Klappe (10) in Bezug auf die Öffnung (51) beweglich zwischen einer geschlossenen Position, in welcher die Klappe (10) wenigstens einen Teil der Öffnung (51) verschließt, und mindestens einer geöffneten Position, in welcher die Klappe (10) einen von null verschiedenen Durchlassquerschnitt für Stauluft in der Leitung (20) definiert, gelagert ist, wobei die Klappe (10) eine Außenseite (12), die in der geschlossenen Position dem Außenraum (52) zugewandt ist, und eine Innenseite (13), die dem Innenraum (53) und dem Inneren der Leitung (20) zugewandt ist, aufweist,
- wobei jede Klappe (10) in Bezug auf die Öffnung (51) durch mindestens eine erste Schubstange (30, 32), an welcher sie mittels einer ersten Schwenkachse (36) angelenkt ist, und mindestens eine zweite Schubstange (31, 33), an welcher sie mittels einer zweiten Schwenkachse (38) angelenkt ist, beweglich gelagert ist, wobei die erste und die zweite Schwenkachse (36, 38) verschieden und zueinander parallel sind,
- wobei jede Klappe (10), die Schubstangen (30, 31, 32, 33), die Schwenkachsen (36, 38), die Leitung (20) und die Öffnung (51) derart ausgebildet und angeordnet sind, dass in jeder geöffneten Position ein von null verschiedener Abstand, äußerer Abstand genannt, die Außenseite (12) jeder Klappe (10) von der Innenwand (22) der Leitung (20) trennt, wobei sich jede Klappe in jeder geöffneten Position nicht in Kontakt mit der Innenwand der Leitung befindet, **dadurch gekennzeichnet, dass**:
- die Kinematik der Klappe (10) dafür ausgelegt ist, in jeder geöffneten Position das Strömen eines von null verschiedenen Stauluftstroms entlang der Außenseite (12) jeder Klappe (10) in der Leitung und das Strömen eines von null verschiedenen Stauluftstroms entlang der Innenseite (13) jeder Klappe (10) in der Leitung zu ermöglichen.

2. Einlass nach Anspruch 1, **dadurch gekennzeichnet, dass** die Innenwand (22) der Leitung (20) mindestens einen konvexen gekrümmten Abschnitt (24) aufweist, wobei der konvexe gekrümmte Abschnitt gegenüber der Innenseite (13) der Klappe in der geöffneten Position angeordnet ist, wobei die Konvexität des konvexen gekrümmten Abschnitts (24) der Innenseite (13) der Klappe zugewandt ist.

3. Einlass nach Anspruch 2, **dadurch gekennzeichnet, dass** der konvexe gekrümmte Abschnitt (24) und die Klappe (10) derart ausgebildet und angeordnet sind und die Kinematik der Verlagerung der Klappe in Bezug auf die Öffnung (51) derart ausgelegt ist, dass in jeder geöffneten Position, wenn die Innenseite (13) der Klappe einen minimalen Luftdurchgangsquerschnitt zwischen der Innenseite und dem konvexen gekrümmten Abschnitt (24) definiert, wenn die Innenseite in jeder zu den Schwenkachsen (36, 38) senkrechten Ebene eine Tangente (T1) in einem Punkt aufweist, der dem minimalen Luftdurchgangsquerschnitt entspricht, und wenn der konvexe gekrümmte Abschnitt (24) in jeder zu den Schwenkachsen (36, 38) senkrechten Ebene eine Tangente (T2) in einem Punkt aufweist, der dem minimalen Luftdurchgangsquerschnitt entspricht, die Tangente (T1) an die Innenseite (13) wenigstens im Wesentlichen parallel zur Tangente (T2) an den konvexen gekrümmten Abschnitt (24) ist.

4. Einlass nach einem der Ansprüche 1 bis 3, **dadurch gekennzeichnet, dass** jede erste Schubstange (30, 32) in Bezug auf einen mit der Hautwand (50) fest verbundenen Träger mittels einer Schwenkverbindung um eine Achse, erste Schubstangenachse (35) genannt, angelenkt ist, die von der ersten Schwenkachse (36) verschieden und wenigstens im Wesentlichen parallel zu dieser Letzteren ist, und dadurch, dass jede zweite Schubstange (31, 33) in Bezug auf einen mit der Hautwand (50) fest verbundenen Träger mittels einer Schwenkverbindung um eine Achse, zweite Schubstangenachse (37) genannt, angelenkt ist, die von der zweiten Schwenkachse (38) verschieden und wenigstens im Wesentlichen parallel zu dieser Letzteren ist.

5. Einlass nach einem der Ansprüche 1 bis 4, **dadurch gekennzeichnet, dass** sie mindestens einen Stellantrieb (58) umfasst, der dafür ausgelegt ist, die erste und/oder die zweite Schubstange (30, 31, 32, 33) drehend antreiben zu können und gegen Drehung sichern zu können, um so jede Klappe (10) zur Verlagerung zwischen der geschlossenen und der geöffneten Position antreiben zu können und jede Klappe (10) nach der Verlagerung arretieren zu können.

6. Einlass nach einem der Ansprüche 1 bis 5, **dadurch gekennzeichnet, dass** die Klappe (10) in Bezug auf die Leitung (20) durch vier Schubstangen (30, 31, 32, 33) angelenkt ist, wobei zwei erste Schubstangen (30, 32) parallel zueinander sind und zwei zweite Schubstangen (31, 33) parallel zueinander sind.

7. Einlass nach einem der Ansprüche 1 bis 6, **dadurch gekennzeichnet, dass** die Klappe (10) mehrere geöffnete Positionen aufweist, die es ermöglichen, den Durchlassquerschnitt für Stauluft in der Leitung zu variieren.

8. Einlass nach einem der Ansprüche 1 bis 7, **dadurch gekennzeichnet, dass**, wenn ein Schnitt der Außenseite (12) der Klappe (10) durch jede Ebene, die diese Außenseite (12) schneidet und parallel zum Stauluftstrom ist, eine Linie ist, die einen Punkt, stromaufwärtiger Punkt genannt, der in der geöffneten Position im äußeren Raum (52) angeordnet ist, und einen Punkt, stromabwärtiger Punkt genannt, der in der geöffneten Position im inneren Raum (53) angeordnet ist, aufweist, wobei durch diese Punkte eine Gerade verläuft, Ausrichtung der Klappe genannt, so bilden die Ausrichtung der Klappe in der geschlossenen Position und die Ausrichtung der Klappe in jeder geöffneten Position einen Winkel (α) von weniger als 50°.

9. Einlass nach einem der Ansprüche 1 bis 8, **dadurch gekennzeichnet, dass** sich die Leitung (20) von der Öffnung (51) aus in einer allgemeinen Richtung erstreckt, die mit der Ausrichtung der Klappe in einer maximal geöffneten Position einen Winkel von weniger als 30° bildet.

10. Einlass nach einem der Ansprüche 1 bis 9, **dadurch gekennzeichnet, dass** jede Klappe (10) eine Vorderkante (15) aufweist, die sich in jeder geöffneten Position im äußeren Raum (52) erstreckt.

11. Einlass nach einem der Ansprüche 1 bis 10, **dadurch gekennzeichnet, dass** die Klappe (10) dafür ausgebildet ist, die Staulufteinlassöffnung (51) ohne Unterbrechung in Bezug auf die Hautwand (50) zu verschließen.

12. Klimaanlage, **dadurch gekennzeichnet, dass** sie mindestens einen Staulufteinlass (5) nach einem der Ansprüche 1 bis 11 umfasst.

13. Antriebsmotor (80) eines Luftfahrzeugs, **dadurch gekennzeichnet, dass** er mindestens einen Staulufteinlass (5) nach einem der Ansprüche 1 bis 11 umfasst.

14. Fahrzeug, **dadurch gekennzeichnet, dass** es mindestens einen Staulufteinlass (5) nach einem der Ansprüche 1 bis 11 umfasst.

15. Luftfahrzeug (70), **dadurch gekennzeichnet, dass** es mindestens einen Staulufteinlass (5) nach einem der Ansprüche 1 bis 11 umfasst.

## Claims

1. Dynamic air intake opening (5), comprising:
- a skin wall (50) separating an exterior space (52) liable to be subjected to a dynamic air stream and an interior space (53) intended to receive a dynamic air intake stream, said skin wall (50) having a dynamic air inlet aperture (51),
- a conduit (20) extending in the interior space (53) from said aperture (51), said conduit (20) being delimited by a wall, referred to as internal wall (22), which is fixed with respect to said skin wall (50) and extends in the interior space (53) from said aperture (51),
- at least one flap (10) for opening/closing said aperture (51), each flap (10) being mounted so as to be able to move with respect to the aperture (51) between a closed position, in which said flap (10) closes off at least part of said aperture (51), and at least one open position, in which said flap (10) defines a non-zero cross section for the dynamic passage of air in the conduit (20), said flap (10) having an external face (12) oriented towards the exterior space (52) in the closed position, and an internal face (13) oriented towards the interior space (53) and towards the inside of the conduit (20),
- each flap (10) being mounted so as to be able to move with respect to the aperture (51) via at least one first connecting rod (30, 32) to which it is articulated about a first pivot pin (36), and at least one second connecting rod (31, 33) to which it is articulated about a second pivot pin (38), the first and second pivot pins (36, 38) being separate and mutually parallel,
- each flap (10), said connecting rods (30, 31, 32, 33), the pivot pins (36, 38), said conduit (20) and the aperture (51) being shaped and arranged such that, in any open position, a non-zero distance, referred to as exterior spacing, separates the external face (12) of each flap (10) from said internal wall (22) of the conduit (20), each flap not being in contact with said internal wall of the conduit in any open position, **characterized in that**:
- the kinematics of the flap (10) are designed to allow, in any open position, a non-zero dynamic air stream to flow along the external face (12) of each flap (10) in the conduit and a non-zero dynamic air stream to flow along the internal face (13) of each flap (10) in the conduit.

2. Opening according to Claim 1, **characterized in that** said internal wall (22) of the conduit (20) has at least one convex curved portion (24), said convex curved portion being disposed facing the internal face (13) of said flap in the open position, the convexity of said convex curved portion (24) being oriented towards the internal face (13) of the flap.

3. Opening according to Claim 2, **characterized in that** said convex curved portion (24) and the flap (10) are shaped and arranged, and the movement kinematics of the flap with respect to the opening (51) are designed, such that in any open position, with the internal face (13) of the flap defining a minimum cross section for the passage of air between the internal face and the convex curved portion (24), with said internal face having, in any plane perpendicular to the pivot pins (36, 38), a tangent (T1) at a point corresponding to said minimum cross section for the passage of air, with said convex curved portion (24) having, in any plane perpendicular to the pivot pins (36, 38), a tangent (T2) at a point of said minimum cross section for the passage of air, said tangent (T1) at the internal face (13) is at least substantially parallel to said tangent (T2) at the convex curved portion (24).

4. Opening according to one of Claims 1 to 3, **characterized in that** each first connecting rod (30, 32) is articulated with respect to a support secured to said skin wall (50) about a pivot connection about a pin, referred to as first connecting-rod pin (35), separate from said first pivot pin (36) and at least substantially parallel thereto, and **in that** each second connecting rod (31, 33) is articulated with respect to a support secured to said skin wall (50) about a pivot connection about a pin, referred to as second connecting-rod pin (37), separate from said second pivot pin (38) and at least substantially parallel thereto.

5. Opening according to one of Claims 1 to 4, **characterized in that** it comprises at least one actuator (58) designed to be able to rotate and to prevent the rotation of at least one of said first and second connecting rods (30, 31, 32, 33) so as to be able to move each flap (10) between the closed position and the open position, and to be able to lock each flap (10) in position after moving.

6. Opening according to one of Claims 1 to 5, **characterized in that** said flap (10) is articulated with respect to the conduit (20) via four connecting rods (30, 31, 32, 33), a pair of first connecting rods (30, 32) being mutually parallel and a pair of second connecting rods (31, 33) being mutually parallel.

7. Opening according to one of Claims 1 to 6, **characterized in that** said flap (10) has a plurality of open positions making it possible to vary the cross section for the dynamic passage of air in the conduit.

8. Opening according to one of Claims 1 to 7, **characterized in that**, with a cross section of the external face (12) of the flap (10) through any plane intersecting said external face (12) and parallel to the dynamic air stream being a line having a point, referred to as upstream point, disposed in the exterior space (52) in the open position and a point, referred to as downstream point, disposed in the interior space (53) in the open position, said points having a straight line referred to as flap orientation passing through them, the orientation of the flap in the closed position and the orientation of the flap in any open position form an angle (α) of less than 50°.

9. Opening according to one of Claims 1 to 8, **characterized in that** said conduit (20) extends from the opening (51) in an overall direction forming an angle of less than 30° with the orientation of the flap in a fully open position.

10. Opening according to one of Claims 1 to 9, **characterized in that** each flap (10) has a leading edge (15) extending, in any open position, into the exterior space (52).

11. Opening according to one of Claims 1 to 10, **characterized in that** the flap (10) is shaped so as to close off the dynamic air inlet aperture (51) without discontinuity with respect to the skin wall (50).

12. Environmental control device, **characterized in that** it comprises at least one dynamic air intake opening (5) according to one of Claims 1 to 11.

13. Aircraft propulsion engine (80), **characterized in that** it comprises at least one dynamic air intake opening (5) according to one of Claims 1 to 11.

14. Vehicle, **characterized in that** it comprises at least one dynamic air intake opening (5) according to one of Claims 1 to 11.

15. Aircraft (70), **characterized in that** it comprises at least one dynamic air intake opening (5) according to one of Claims 1 to 11.
